# EUROPÄISCHE PATENTANMELDUNG

(11) **EP 2 975 730 A1**
(43) Veröffentlichungstag der Anmeldung: **20.01.2016**
(21) Anmeldenummer: 14177453.9
(22) Anmeldetag: 17.07.2014
(51) Int. Cl.: H02K 1/27, H02K 1/30

(54) **Läuferpaket einer rotierenden elektrischen Maschine**

(71) Anmelder: Siemens Aktiengesellschaft, 80333 München (DE)
(72) Erfinder: Finger, Christian, 97688 Bad Kissingen (DE)

(57) **Zusammenfassung**

Die Erfindung betrifft ein Läuferpaket (1) einer rotierenden elektrischen Maschine. Das Läuferpaket (1) umfasst einen Grundkörper (3), wenigstens ein Einzelsegment (5) und wenigstens einen Blockmagnet (7). Der Grundkörper (3), das wenigstens eine Einzelsegment (5) und der wenigstens eine Blockmagnet (7) sind derart ausgebildet, dass sie formschlüssig miteinander verbunden sind.

## Beschreibung

Die Erfindung betrifft ein Läuferpaket einer rotierenden elektrischen Maschine.

Läuferpakete rotierender elektrischer Maschinen bestehen in der Regel aus mehreren Komponenten, die miteinander verbunden werden. Diese Komponenten werden beispielsweise durch Kleben, Bandagieren und/oder mittels Spannstiften, Bolzen, Zugankern, Endscheiben und/oder Endblechen miteinander verbunden.

Der Erfindung liegt die Aufgabe zugrunde, ein verbessertes Läuferpaket einer rotierenden elektrischen Maschine anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Ein erfindungsgemäßes Läuferpaket einer rotierenden elektrischen Maschine umfasst einen Grundkörper, wenigstens ein Einzelsegment und wenigstens einen Blockmagnet, wobei der Grundkörper, das wenigstens eine Einzelsegment und der wenigstens eine Blockmagnet derart ausgebildet sind, dass sie formschlüssig miteinander verbunden sind.

Da der Grundkörper, das wenigstens eine Einzelsegment und der wenigstens eine Blockmagnet derart ausgeführt sind, dass sie formschlüssig verbunden sind, werden zum Zusammenfügen des Läuferpakets keine zusätzlichen Komponenten wie beispielsweise Klebstoff, Bandagen, Spannstifte, Bolzen, Zuganker, Endscheiben oder Endbleche benötigt, die zur eigentlichen elektromagnetischen Funktion des Läuferpakets nicht beitragen. Dies vereinfacht vorteilhaft die Montage des Läuferpakets und reduziert außerdem vorteilhaft die Herstellungskosten des Läuferpakets.

Ausgestaltungen der Erfindung sehen vor, dass der Grundkörper und/oder wenigstens ein Einzelsegment stanzpaketiert ausgeführt sind.

Dies ermöglicht eine vorteilhafte Herstellung des Grundkörpers und/oder wenigstens eines Einzelsegments jeweils als ein zusammenhängendes Blechpaket aus Blechband.

Eine weitere Ausgestaltung der Erfindung sieht vor, dass der Grundkörper die Form eines Rohres mit mehreren radial nach außen abstehenden und axial verlaufenden Läufersegmenten hat.

Dabei bezeichnen hier und im Folgenden ein axialer Verlauf bzw. eine axiale Richtung stets einen Verlauf bzw. eine Richtung parallel zu einer Rotationsachse des Läuferpakets. Ein radialer Verlauf bzw. radiale Richtung bezeichnen entsprechend stets einen Verlauf bzw. eine Richtung senkrecht zu der Rotationsachse und auf die Rotationsachse zu oder von der Rotationsachse weg.

Ein Grundkörper mit radial nach außen abstehenden und axial verlaufenden Läufersegmenten ermöglicht vorteilhaft, zwischen den Läufersegmenten Blockmagneten und/oder Einzelsegmente anzuordnen.

Dementsprechend sieht eine weitere Ausgestaltung der Erfindung vor, dass zwischen zwei benachbarten Läufersegmenten jeweils wenigstens ein Blockmagnet und/oder wenigstens ein Einzelsegment angeordnet ist.

Vorzugsweise sind dabei zwischen zwei benachbarten Läufersegmenten jeweils zwei Blockmagneten und ein zwischen den beiden Blockmagneten angeordnetes Einzelsegment angeordnet.

Dadurch werden die Läufersegmente und Einzelsegmente vorteilhaft regelmäßig und abwechselnd entlang des Umfangs des Läuferpakets verteilt, und zwischen einem Einzelsegment und einem Läufersegment wird jeweils ein Blockmagnet angeordnet.

Eine weitere Ausgestaltung der Erfindung sieht vor, dass der Grundkörper für jeden an ihm anliegenden Blockmagnet eine axial und radial verlaufende Grundkörpernut aufweist, in die der Blockmagnet hineinragt und deren radiale Ausdehnung der radialen Ausdehnung des Blockmagnet entspricht, so dass sie den Blockmagnet radial fixiert.

Dadurch werden die Blockmagneten vorteilhaft mittels der Grundkörpernuten formschlüssig mit dem Grundkörper verbunden.

Eine weitere Ausgestaltung der Erfindung sieht vor, dass jedes Einzelsegment für jeden an ihm anliegenden Blockmagnet eine axial und radial verlaufende Einzelsegmentnut aufweist, in die der Blockmagnet hineinragt und deren radiale Ausdehnung der radialen Ausdehnung des Blockmagnet entspricht.

Dadurch werden mittels einer Einzelsegmentnut vorteilhaft jeweils ein Blockmagnet und ein Einzelsegment formschlüssig miteinander verbunden.

Eine weitere Ausgestaltung der Erfindung sieht vor, dass der Grundkörper für jeden an ihm anliegenden Blockmagnet wenigstens eine dem Blockmagnet zugewandte Oberfläche mit wenigstens einem Grundkörperfederelement, an dem der Blockmagnet anliegt, aufweist.

Entsprechend sieht eine weitere Ausgestaltung der Erfindung vor, dass wenigstens ein Einzelsegment für wenigstens einen an ihm anliegenden Blockmagnet wenigstens eine dem Blockmagnet zugewandte Oberfläche mit wenigstens einem Einzelsegmentfederelement, an dem der Blockmagnet anliegt, aufweist. Mittels der Grundkörperfederelemente und Einzelsegmentfederelemente können vorteilhaft Fertigungstoleranzen des Grundkörpers, der Einzelsegmente und/oder der Blockmagneten ausgeglichen werden. Außerdem kann mittels der Grundkörperfederelemente und Einzelsegmentfederelemente das Läuferpaket vorteilhaft verspannt werden, so dass nach dem Zusammenfügen des Grundkörpers, der Einzelsegmente und der Blockmagneten ein kompaktes und steifes Läuferpaket vorliegt.

Vorzugsweise ist dabei wenigstens ein Grundkörperfederelement als eine axial verlaufende Kontaktnase ausgebildet und der Grundkörper weist ein parallel zu der Kontaktnase verlaufendes Langloch in einem Randbereich auf, in dem die Kontaktnase angeordnet ist.

Entsprechend ist vorzugsweise wenigstens ein Einzelsegmentfederelement als eine axial verlaufende Kontaktnase ausgebildet und das Einzelsegment weist ein parallel zu der Kontaktnase verlaufendes Langloch in einem Randbereich auf, in dem die Kontaktnase angeordnet ist.

Dabei bewirkt das hinter einer Kontaktnase angeordnete Langloch jeweils, dass ein die Kontaktnase aufweisender Teil des Randbereichs des Grundkörpers bzw. des Einzelsegments jeweils in das Langloch hinein elastisch deformierbar ist.

Eine weitere Ausgestaltung der Erfindung sieht vor, dass jeder Blockmagnet quaderförmig ausgebildet ist.

Dadurch hat jeder Blockmagnet eine einfache geometrische Form und ist dadurch besonders kostengünstig realisierbar.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine Querschnittsdarstellung eines Läuferpakets einer rotierenden elektrischen Maschine,
- FIG 2: einen vergrößerten Ausschnitt der in FIG 1 dargestellten Querschnittsdarstellung, und
- FIG 3: einen vergrößerten Ausschnitt der in FIG 2 dargestellten Querschnittsdarstellung.

Einander entsprechende Teile sind in den Figuren mit den gleichen Bezugszeichen versehen.

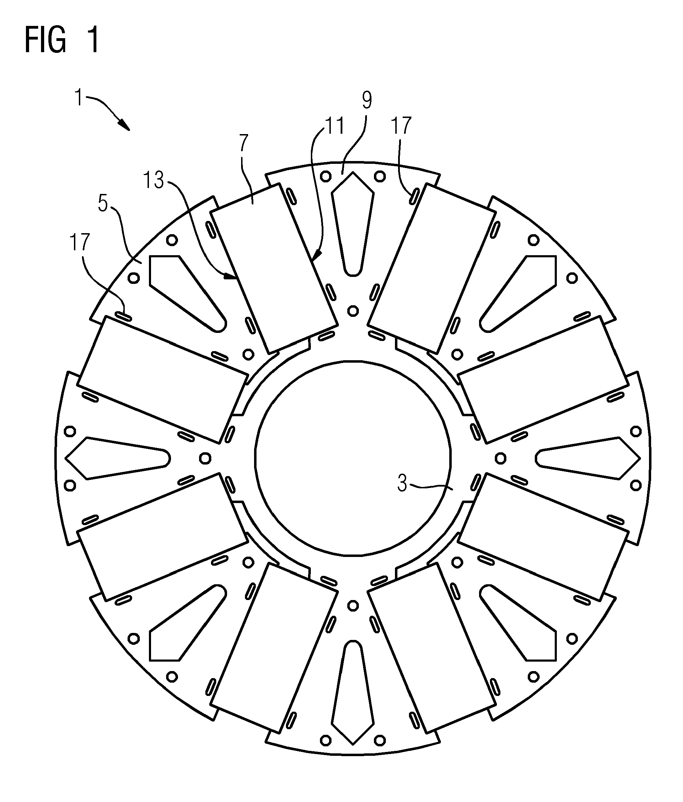

FIG 1 zeigt eine Querschnittsdarstellung eines Läuferpakets 1 einer rotierenden elektrischen Maschine.

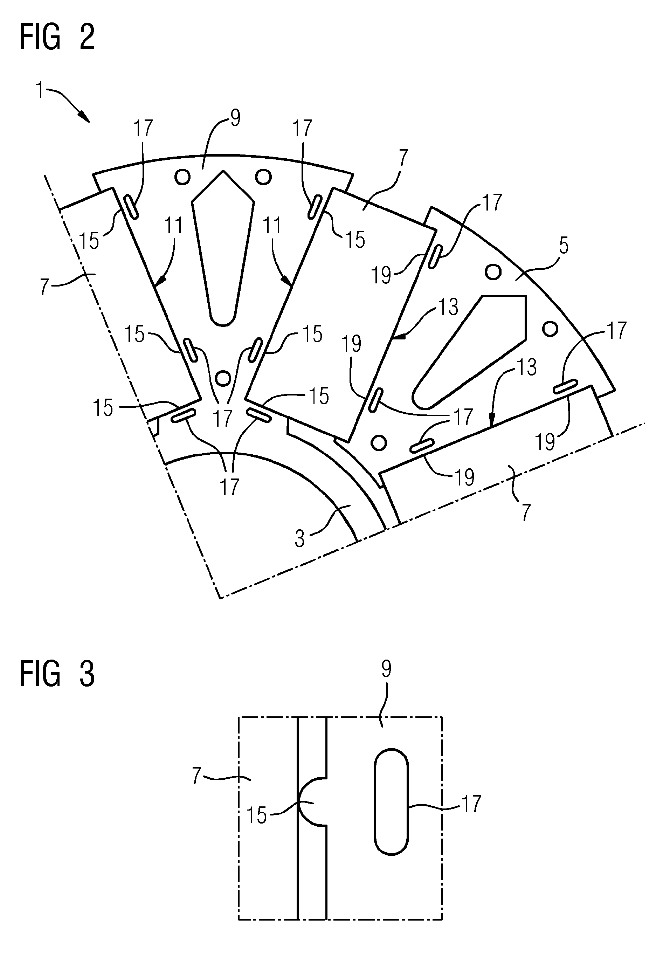

FIG 2 zeigt einen vergrößerten Ausschnitt der in FIG 1 dargestellten Querschnittsdarstellung.

Das Läuferpaket 1 umfasst einen Grundkörper 3, mehrere Einzelsegmente 5 und mehrere jeweils quaderförmige Blockmagneten 7. Der Grundkörper 3 hat die Form eines Rohres mit mehreren radial nach außen abstehenden und axial verlaufenden Läufersegmenten 9. Dabei sind zwischen zwei benachbarten Läufersegmenten 9 jeweils zwei Blockmagneten 7 und ein zwischen den beiden Blockmagneten 7 angeordnetes Einzelsegment 5 angeordnet.

Die zwischen zwei Läufersegmenten 9 angeordneten Blockmagneten 7 und das dazwischen angeordnete Einzelsegment 5 sind formschlüssig miteinander und mit den beiden Läufersegmenten 9 verbunden. Dazu weist der Grundkörper 3 für jeden an ihm anliegenden Blockmagnet 7 eine axial und radial in einem Läufersegment 9 verlaufende Grundkörpernut 11 auf, in die der Blockmagnet 7 hineinragt und deren radiale Ausdehnung der radialen Ausdehnung des Blockmagnet 7 entspricht, so dass sie den Blockmagnet 7 radial fixiert. Ferner weist jedes Einzelsegment 5 für jeden an ihm anliegenden Blockmagnet 7 eine axial und radial verlaufende Einzelsegmentnut 13 auf, in die der Blockmagnet 7 hineinragt und deren radiale Ausdehnung der radialen Ausdehnung des Blockmagnet 7 entspricht.

Jede Grundkörpernut 11 weist mehrere Grundkörperfederelemente 15 auf, an denen der in die Grundkörpernut 11 hineinragende Blockmagnet 7 anliegt.

FIG 3 zeigt ein derartiges Grundkörperfederelement 15 in einer Querschnittsdarstellung. Jedes Grundkörperfederelement 15 ist als eine axial verlaufende Kontaktnase ausgebildet, hinter der in einem Randbereich des Grundkörpers 3 parallel zu der Kontaktnase ein Langloch 17 verläuft, so dass ein die Kontaktnase aufweisender Teil des Randbereichs in das Langloch 17 hinein elastisch deformierbar ist.

In jeder Grundkörpernut 11 verlaufen zwei Kontaktnasen im Nutgrund der Grundkörpernut 11 und eine dritte Kontaktnase verläuft in einer läuferzentrumsseitigen Nutwand der Grundkörpernut 11.

Jede Einzelsegmentnut 13 weist zwei Einzelsegmentfederelemente 19 auf, an denen der in die Einzelsegmentnut 13 hineinragende Blockmagnet 7 anliegt. Analog zu einem in FIG 3 dargestellten Grundkörperfederelement 15 ist auch jedes Einzelsegmentfederelement 19 als eine axial verlaufende Kontaktnase ausgebildet, hinter der in einem Randbereich des Einzelsegments 5 parallel zu der Kontaktnase ein Langloch 17 verläuft, so dass ein die Kontaktnase aufweisender Teil des Randbereichs in das Langloch 17 hinein elastisch deformierbar ist. Dabei verlaufen die beiden Kontaktnasen im Nutgrund der Einzelsegmentnut 13.

Die Grundkörperfederelemente 15 und die Einzelsegmentfederelemente 19 gleichen Fertigungstoleranzen des Grundkörpers 3, der Einzelsegmente 5 und/oder der Blockmagneten 7 aus und sorgen zudem für eine Verspannung des Läuferpakets 1, so dass nach dem Zusammenfügen des Grundkörpers 3, der Einzelsegmente 5 und der Blockmagneten 7 ein kompaktes und steifes Läuferpaket 1 vorliegt.

Der Grundkörper 3 und/oder die Einzelsegmente 5 sind vorzugsweise stanzpaketiert ausgeführt.

Das in den Figuren 1 bis 3 dargestellte Ausführungsbeispiel eines Läuferpakets 1 weist jeweils vier Einzelsegmente 5 und Läufersegmente 9 und acht Blockmagneten 7 auf. Andere Ausführungsbeispiele sehen eine andere Anzahl von Einzelsegmenten 5 und Läufersegmenten 9 und eine entsprechende Anzahl von Blockmagneten 7 und/oder eine andere Anzahl von Einzelsegmentfederelementen 19 in einer Einzelsegmentnut 13 und/oder Grundkörperfederelementen 15 in einer Grundkörpernut 11 vor, sind davon abgesehen jedoch analog zu dem in den Figuren 1 bis 3 dargestellten Ausführungsbeispiel gestaltet.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Läuferpaket (1) einer rotierenden elektrischen Maschine, umfassend einen Grundkörper (3), wenigstens ein Einzelsegment (5) und wenigstens einen Blockmagnet (7), wobei der Grundkörper (3), das wenigstens eine Einzelsegment (5) und der wenigstens eine Blockmagnet (7) derart ausgebildet sind, dass sie formschlüssig miteinander verbunden sind.

2. Läuferpaket (1) nach Anspruch 1, **dadurch ge- kennzeichnet,** dass der Grundkörper (3) stanzpaketiert ausgeführt ist.

3. Läuferpaket (1) nach einem der vorhergehenden Ansprüche, **dadurch gekennzeichnet, dass** wenigstens ein Einzelsegment (5) stanzpaketiert ausgeführt ist.

4. Läuferpaket (1) nach einem der vorhergehenden Ansprüche, **dadurch gekennzeichnet, dass** der Grundkörper (3) die Form eines Rohres mit mehreren radial nach außen abstehenden und axial verlaufenden Läufersegmenten (9) hat.

5. Läuferpaket (1) nach Anspruch 4, **dadurch gekennzeichnet, dass** zwischen zwei benachbarten Läufersegmenten (9) jeweils wenigstens ein Blockmagnet (7) und/oder wenigstens ein Einzelsegment (5) angeordnet ist.

6. Läuferpaket (1) nach Anspruch 5, **dadurch gekennzeichnet, dass** zwischen zwei benachbarten Läufersegmenten (9) jeweils zwei Blockmagneten (7) und ein zwischen den beiden Blockmagneten (7) angeordnetes Einzelsegment (5) angeordnet sind.

7. Läuferpaket (1) nach einem der vorhergehenden Ansprüche, **dadurch gekennzeichnet, dass** der Grundkörper (3) für jeden an ihm anliegenden Blockmagnet (7) eine axial und radial verlaufende Grundkörpernut (11) aufweist, in die der Blockmagnet (7) hineinragt und deren radiale Ausdehnung der radialen Ausdehnung des Blockmagnet (7) entspricht, so dass sie den Blockmagnet (7) radial fixiert.

8. Läuferpaket (1) nach einem der vorhergehenden Ansprüche, **dadurch gekennzeichnet, dass** jedes Einzelsegment (5) für jeden an ihm anliegenden Blockmagnet (7) eine axial und radial verlaufende Einzelsegmentnut (13) aufweist, in die der Blockmagnet (7) hineinragt und deren radiale Ausdehnung der radialen Ausdehnung des Blockmagnet (7) entspricht.

9. Läuferpaket (1) nach einem der vorhergehenden Ansprüche, **dadurch gekennzeichnet, dass** der Grundkörper (3) für jeden an ihm anliegenden Blockmagnet (7) wenigstens eine dem Blockmagnet (7) zugewandte Oberfläche mit wenigstens einem Grundkörperfederelement (15), an dem der Blockmagnet (7) anliegt, aufweist.

10. Läuferpaket (1) nach Anspruch 9, **dadurch gekennzeichnet, dass** wenigstens ein Grundkörperfederelement (15) als eine axial verlaufende Kontaktnase ausgebildet ist und der Grundkörper (3) ein parallel zu der Kontaktnase verlaufendes Langloch (17) in einem Randbereich, in dem die Kontaktnase angeordnet ist, aufweist.

11. Läuferpaket (1) nach einem der vorhergehenden Ansprüche, **dadurch gekennzeichnet, dass** wenigstens ein Einzelsegment (5) für wenigstens einen an ihm anliegenden Blockmagnet (7) wenigstens eine dem Blockmagnet (7) zugewandte Oberfläche mit wenigstens einem Einzelsegmentfederelement (19), an dem der Blockmagnet (7) anliegt, aufweist.

12. Läuferpaket (1) nach Anspruch 11, **dadurch gekennzeichnet, dass** wenigstens ein Einzelsegmentfederelement (19) als eine axial verlaufende Kontaktnase ausgebildet ist und das Einzelsegment (5) ein parallel zu der Kontaktnase verlaufendes Langloch (17) in einem Randbereich, in dem die Kontaktnase angeordnet ist, aufweist.

13. Läuferpaket (1) nach einem der vorhergehenden Ansprüche, **dadurch gekennzeichnet, dass** jeder Blockmagnet (7) quaderförmig ausgebildet ist.
